**Europäisches Patentamt**

**European Patent Office**

**Office européen des brevets**

(11) Veröffentlichungsnummer: **0 304 504**
**B1**

# EUROPÄISCHE PATENTSCHRIFT

(45) Veröffentlichungstag der Patentschrift:
24.10.90

(51) Int. Cl.⁵: **A61C 17/02**, G07F 17/18

(21) Anmeldenummer: 87112422.8

(22) Anmeldetag: 26.08.87

(54) **Zahn- und Mundpflegeeinrichtung.**

(43) Veröffentlichungstag der Anmeldung:
01.03.89 Patentblatt 89/9

(45) Bekanntmachung des Hinweises auf die Patenterteilung:
24.10.90 Patentblatt 90/43

(84) Benannte Vertragsstaaten:
AT BE CH DE ES FR GB IT LI NL SE

(56) Entgegenhaltungen:
FR-A- 1 603 156

(73) Patentinhaber: Zogelmann, Pulca Dr.med.,
Kernerstrasse 4, D-7101 Löwenstein(DE)
Patentinhaber: Benker, Nora Dipl.-Ing., Am
Melchiorsgraben 14, D-7100 Heilbronn(DE)

(72) Erfinder: Zogelmann, Pulca Dr.med., Kernerstrasse 4,
D-7101 Löwenstein(DE)
Erfinder: Benker, Nora Dipl.-Ing., Am
Melchiorsgraben 14, D-7100 Heilbronn(DE)

(74) Vertreter: Stadler, Heinz, Dipl.-Ing.,
Weikersheimerstrasse 17, D-7000 Stuttgart 40(DE)

**Beschreibung**

Die Erfindung betrifft eine Einrichtung zur Zahn- und Mundpflege mit einer Munddusche, bei der mittels einer Pumpe eine insbesondere medizinisch wirksame Flüssigkeit über einen beweglichen, aus einem Gehäuse herausziehbaren Schlauch einer damit über ein Anschlußteil lösbar verbindbaren, aus einem Griffteil und einem Mundstück gebildeten Spritzdüse zuführbar und davon als vorzugsweise pulsierender Ein- oder Mehrfachstrahl abgebbar ist.

Eine derartige, insbesondere zur Reinigung der Zahnzwischenräume und Pflege des Zahnfleisches im Bereich des Gingivalsaums vorgesehene Einrichtung ist durch ein unter der Bezeichnung "Paradentospray-Automat" vertriebenes, zum Einsatz in Zahnarztpraxen vorgesehenes Dental-Pflegegerät der Firma Dürr-Dental GmbH & Co. KG, D–7120 Bietigheim-Bissingen, z. B. aus dem Prospekt Nr. 9000.615.04 vom April 85 (4/85) bekannt. Im Vergleich zu einfachen, beispielsweise in den EP-OS 0 066 930, 0 085 795 und 0 123 145 beschriebenen Haushalts-Mundduschen, bei denen die Reinigung und Pflege nur durch rein mechanische Wirkung des pulsierenden Wasserstrahls erfolgt und die sich schon aus hygienischen Gründen lediglich für den privaten Hausgebrauch eignen, können mit dem bekannten für Dauerbetrieb konzipierten professionellen Gerät unterschiedliche, automatisch ablaufende Programme mit der jeweiligen Indikation entsprechend zusammengesetzten Flüssigkeitsmischungen (z.B. Weinsteinsäure und Natriumcarbonat), gegebenenfalls mit Luftzusatz in genauer Dosierung und richtiger Reihenfolge durchgeführt und auch höhere Strahldrücke eingestellt werden. Bei regelmäßiger Behandlung ist mit diesem Gerät durch gründliche Entfernung des bakteriellen Zahnbelags, vollständige Ausschwemmung auch von schwer zugänglicher Detritus aus Zahnzwischenräumen und -taschen, sowie wirksame Massage des Zahnfleisches eine erfolgreiche Prophylaxe und Therapieunterstützung möglich.

Allerdings ist zur Gerätebedienung – vom täglichen Anstellen der Heizung über die Einstellung des jeweils erforderlichen Programms und die Unterweisungen der Patienten hinsichtlich der Bedienung des Fußschalters bis zur Sterilisation der Spritzdüsen nach jedem Gebrauch im Autoklaven – geschultes Personal nötig. Außerdem sind die Spritzdüsen, um für Dauerbetrieb geeignet zu sein, in Material, Ausführung und Anschlußtechnik aufwendig und teuer. Trotzdem ist deren Lebensdauer durch Verkalkung des Mundstücks begrenzt, weil dadurch der Strahldruck und die Mischungsverhältnisse nicht mehr den programmgemäßen Sollwerten entsprechen. Überdies ist häufig die Behandlungsdauer nicht ausreichend, weil der Patient die Flüssigkeitszufuhr durch Betätigung des Fußschalters unterbricht.

Diese bekannte Zahn- und Mundpflegeeinrichtung ist somit teuer und in seiner Anwendung auf zahnärztliche Praxen beschränkt, also nicht im erforderlichen Maße verfügbar. Denn für eine auf breiter Basis wirklich erfolgreiche Bekämpfung bzw. Verhütung der die Volksgesundheit in zunehmendem Maße beeinträchtigenden und die Kostenexplosion im Gesundheitswesen fördernden Parodontose in alles seinen Erscheinungsformen ist eine Zahn- und Mundpflegebehandlung der beschriebenen Art (keine Verwendung manuell gebrauchter oder elektrischer Zahnbürsten) nach jeder Mahlzeit, d.h. nicht nur zu Hause, sondern auch in Betrieben, Schulen, Gaststätten, Krankenhäusern usw. nötig.

Es ist daher Aufgabe der Erfindung, eine Einrichtung der eingangs genannten Art derart weiterzubilden, daß sie einfach aufgebaut, zum Einsatz an beliebigen Standorten geeignet und von jedermann bedienbar ist, dabei größtmögliche Hygiene gewährleistet und kostengünstig sowie dauerhaft funktionssicher ist.

Diese Aufgabe ist dadurch gelöst, daß eine Vielzahl von als Einwegteile in zumindest keimarmer Einzelverpackung ausgebildeten Spritzdüsen in wenigstens einem Vorratsbehälter gelagert und ein Münzschalter vorgesehen ist, mit dem über ein Steuergerät durch Eingabe eines Geldbetrags nacheinander – jeweils eine Spritzdüse aus dem wenigstens einen Vorratsbehälter mittels einer Fördereinrichtung bereitgestellt, – die Verpackung zumindest am steckseitigen Ende der Spritzdüse mittels einer Ablösevorrichtung entfernt, – die Spritzdüse und das Schlauchanschlußteil von einer Vorrichtung selbsttätig rastend zusammengesteckt, – die Pumpe zur Flüssigkeitszufuhr eingeschaltet und nach Ablauf einer dem Münzwert entsprechenden Zeit von einem Zeitschalter wieder abgeschaltet und – die Rastverbindung nach Gebrauch der Munddusche mittels einer weiteren Vorrichtung selbsttätig gelöst wird.

Der vorgesehene Münzschalter kann selbstverständlich auch für die Annahme von Geldscheinen ausgelegt sein und/oder einen Geldwechselautomaten beinhalten, sowie eine Geldrückgabeeinrichtung für Überzahlungen und ggf. eine bei Funktions- oder Bedienungsfehlern sowie bei Eingabe von Falschgeld wirksame Münzeingabesperre aufweisen.

Die erfindungsgemäße Einrichtung ermöglicht bereits in der Ausführung gemäß Anspruch 1 eine Zahn- und Mundpflege, die qualitativ mit derjenigen einer beschriebenen professionellen Munddusche vergleichbar ist, aber von jedermann ohne Bedienungspersonal und auf sehr einfache Weise durchgeführt werden kann. Sie ist damit zur Aufstellung an allen Orten, an denen ein Bedarf besteht – z.B. in Betrieben und Gaststätten –, geeignet, wobei jede Behandlung nur einen Bruchteil der entsprechenden Pflege mit Geräten in Arztpraxen kostet. Allein die Tatsache, daß eine derartige Einrichtung stets parat ist, wo und wann sie auch immer benötigt wird, steigert die Anwendungsquote bereits wesentlich. Die geringen Kosten fördern diese Wirkung zusätzlich, wobei damit gerechnet werden kann, daß sie durch Zuschüsse von Staat und Krankenkassen als positiven Beitrag zur Volksgesundheit und Kostenminderung im Gesundheitswesen noch weiter gesenkt werden.

Darüberhinaus ist durch die Verwendung von keimarmen z.B. in Blistertechnik verpackten, im Aufbau und Materialaufwand billigen Einweg-Spritzdüsen und den Wegfall der Sterilisierung gebrauchter Spritzdüsen insgesamt eine Kostenminderung bei hohem hygienischen Standard erzielt.

Schließlich ist eine ganz wesentliche Vereinfachung der Handhabung und damit eine noch bessere Eignung der erfindungsgemäßen Einrichtung zur Benutzung durch jedermann durch die angeführte automatische Kupplungs- und Entkupplungsvorrichtung erreicht. Unabhängig von dem Geschick des jeweiligen Benutzers ist in stets gleicher kurzer Zeit und ohne die Gefahr einer Beschädigung oder falschen Handhabung die Verbindung zwischen Spritzdüse und Kabelanschlußteil hergestellt. Außerdem unterliegt das Lösen dieser Verbindung nicht mehr der Aufmerksamkeit des Benutzers, so daß in vorteilhafter Weise insoweit keine unerwünschten Zeitverzögerungen bei der nächsten Benutzung auftreten können.

Aus der FR-PS 1 603 156 ist es zwar bekannt, mittels eines zum Aufstellen in öffentlichen Gebäuden bestimmten Münzapparates folienverpackte Zahnbürsten mit Zahnpasta und Plastikbecher bereitzustellen. Zahnbürsten sind indessen, wie vorstehend angeführt, nicht zur Parodontosebehandlung geeignet. Darüberhinaus ist dieser Druckschrift lediglich ein Teil der der Erfindung zugrundeliegenden Aufgabe bei einer anderen Zahnpflegeeinrichtung entnehmbar, es sind jedoch keinerlei Hinweise auf wesentliche konkrete Ausführungsmerkmale für eine Einrichtung der eingangs genannten Art gegeben oder auch nur nahegelegt, weil völlig unterschiedliche technische Gegebenheiten vorliegen, die auch andersartige technische Lösungen bedingen.

In den Unteransprüchen sind vorteilhafte Weiterbildungen bzw. Ausgestaltungen der erfindungsgemäßen Einrichtung nach dem Hauptanspruch angegeben.

So ist in Anspruch 2 durch einen an sich bekannten Taster ein vorzeitiges Spritzen absolut unabhängig von den zeitlichen Gegebenheiten des Einzelfalles – z.B. einer unvorhersehbaren und daher nicht vorprogrammierten Zeitverzögerung beim Verbinden von Spritzdüse und Schlauchanschlußteil – wirksam vermieden. Überdies ist durch die manuelle Tasterbedienung eine Verkürzung bei Behandlungsdauer, die – wie bereits weiter oben ausgeführt – bei dem bekannten Gerät mit Fußschalter vorkommt, praktisch ausgeschlossen.

Um ein Höchstmaß an Sicherheit hinsichtlich einer dichten und mechanisch festen Kupplung von Spritzdüse und Kabelanschlußteil zu gewährleisten, ist in Anspruch 3 eine optische Überwachung der exakten Verbindung vorgesehen.

In den Ansprüchen 4 und 5 sind vorteilhafte konkrete Ausführungen der Verbindungs- und der Lösevorrichtung angegeben. Beide Vorrichtungen zeichnen sich insbesondere durch einen einfachen und robusten Aufbau sowie eine hohe Wiederkehrgenauigkeit aus. Dabei wirkt der Doppelexzenterantrieb der Klemmbacken zugleich als Fördereinrichtung zum Transport der Spritzdüsen aus dem Vorratsbehälter in die Steckposition und als Halter der Spritzdüsen für den Steckvorgang selbst. Der Führungsrollenantrieb des Schlauches weist beispielsweise zwei um 180° zueinander versetzte motorgetriebene Rollen auf, die am Umfang des Schlauches angreifen, wobei zur Erhöhung der Traktion Querrippen der Rollen in die zahnstangenförmig ausgebildete Schlauchoberfläche eingreifen.

Die beiden Abzugsbacken können so gelagert sein, daß die Ansätze (z.B. über Konusflächen) beim radialen Zusammenführen gegen Federdruck etwas axial ausweichen, ehe sie die Rastnasen der Finger der Spritzdüse zum radialen Auseinanderziehen hintergreifen. Es ist aber auch möglich, die Abzugsbacken zunächst in geringer Entfernung von der Fingerstirnfläche radial zusammmenzuführen und dann in axialer Richtung gegen diese zu bewegen, bis sie die Rastnasen der Finger hintergreifen.

Die zum radialen Auseinanderziehen der Finger benötigte Kraft ist relativ groß, weil diese zur Sicherstellung einer festen Rastverbindung verhältnismäßig starr ausgelegt sind. Diese Kraft, und damit der Aufwand für ihre Erzeugung ist sehr einfach und praktisch ohne Mehrkosten durch eine Sollbruchstelle gemäß Anspruch 6 verringerbar.

Eine Ausgestaltung der erfindungsgemäßen Einrichtung nach Anspruch 7 verhindert in vorteilhafter Weise den Austritt von im Schlauch befindlicher Restflüssigkeit und, was noch wichtiger ist, von größeren Flüssigkeitsmengen bei unbeabsichtigtem Einschalten der Pumpe vor dem Aufstecken der Spritzdüse auf das Kabelanschlußteil und ihrer Einführung in die Mundhöhle. Das axialbewegliche Sperrglied kann im einfachsten Fall z.B. als Kugel ausgebildet sein, die bei gesperrtem Ventil durch die Druckfeder an eine geeignete Gegenfläche des Schlauchanschlußteils gepreßt wird. Der Kugeldurchmesser muß dabei aber zur Ermöglichung des Flüssigkeitsdurchtritts durch das offene Ventil kleiner sein als der Durchmesser des Zylinders und ist daher im Zylinder nicht sauber geführt. Dadurch ist der Flüssigkeitsdurchtritt nicht stetig sicher gewährleistet. Günstiger ist es, das Sperrglied als am Umfang geschlitzten Käfig mit einem kegelstumpfförmigen geschlossen Endteil auszubilden, das im Sperrzustand des Ventils mit einer konischen Stirnfläche an einer angepaßten konischen Innenfläche des Schlauchanschlußteiles angepreßt wird. Bei dieser Lösung ist es möglich, den Außendurchmesser des Sperrgliedes lediglich geringfügig kleiner zu wählen als den Innendurchmesser des Zylinders, wodurch eine stets gute Führung des Sperrgliedes im Ventilzylinder erreicht wird. Dabei ist es zweckmäßig, die Druckfeder lagestabil auf einem zentrischen Zapfen des Sperrgliedes anzuordnen, so daß insgesamt eine dauerhaft sichere Funktion des Ventils gewährleistet ist.

Neben der beschriebenen Abdichtung bewirkt das Ventil durch den Druck seines axial beweglichen Sperrgliedes auf den Abstoßdorn der Spritzdüse zugleich ein erwünschtes Abstossen der Spritzdüse beim Lösen der Rastverbindung. Die gebrauchte Spritzdüse fällt dadurch nämlich mit Sicherheit ohne die Gefahr eines Hängenbleibens in den dafür vorgesehenen Abfallbehälter, womit die Betriebssicherheit nicht unwesentlich erhöht ist.

Zweckmäßigerweise ist der Abfallbehälter gemäß Anspruch 8 ausgeführt, wodurch eine äußerst hygienische Entsorgung der benutzen Spritzdüsen bei geringstem Handhabungsaufwand erreicht wird, weil der Deckel als Bakteriensperre dient und seine Öffnung und Schließung selbsttätig erfolgt. Bei Verwendung eines austauschbaren Plastiksacks im Innern des Abfallbehälters ist der zusätzliche Vorteil erreicht, daß dieser nicht selbst zu desinfizieren ist.

Im einfachsten Fall öffnet sich der Einlaß im z.B. aus zwei sich überlappenden schwenkbaren Teilen bestehenden Deckel durch das Gewicht der darauffallenden Spritzdüse und schließt sich selbsttätig unter leichtem Federdruck wieder. Bei aufwendigeren Ausführungen kann der Verschluß beispielsweise vom Abtrennvorgang der Lösevorrichtung gesteuert werden.

Durch die in Anspruch 9 vorgeschlagene Verpackung der Spritzdüsen in Endlosfolie entfallen in kostensparender Weise besondere Maßnahmen zur Bereitstellung der einzelnen Spritzdüsen, weil dies durch die Fördereinrichtung automatisch miterfolgt. Zudem ist dabei der Vorteil gegeben, daß die Spritzdüsen bereits in der für das steckbare Verbinden richtigen Lage ankommen, während dazu bei loser Einzelverpackung eine besondere Einrichtung nötig ist.

Vor dem Verbinden der Spritzdüse mit dem Schlauchanschlußteil muß sie zunächst vom Folienband getrennt werden. Dazu ist eine Auftrennvorrichtung – z.B. eine Schneidkante, ein Messer oder auch nur ein spitzer Dorn – erforderlich, der zweckmäßigerweise (auch bei manuellem Entfernen) gemäß Anspruch 10 Teil der erfindungsgemäßen Einrichtung ist. Insbesondere bei dem vorgesehenen automatischen Verbinden von Spritzdüse und Schlauchanschlußteil und/oder bei in Endlosfolie eingesiegelten Spritzdüsen ist es besonders vorteilhaft, diese Auftrennvorrichtung nach Anspruch 11 als mit der Fördereinrichtung zusammenwirkendes Trennmesser auszubilden, das bei radialem Zusammenführen der Klemmbacken durch den Exzenterantrieb wirksam wird.

Zur Verbindung von Spritzdüse und Schlauchanschlußteil muß die Verpackungshülle zumindest am steckseitigen Endbereich der Spritzdüse entfernt werden. Hierzu ist es gemäß Anspruch 12 vorteilhaft, eine vorzugsweise am Schlauchanschlußteil angebrachte Ablösevorrichtung vorzusehen.

Zur weiteren Erhöhung der Hygiene ist in Anspruch 13 eine Sprayvorrichtung vorgesehen, mit der das Schlauchanschlußteil nach jeder Behandlung desinfiziert wird, so daß der nachfolgende Benutzer auch nicht ungewollt mit bakterienbehafteten Teilen in Berührung kommen kann.

Eine vorteilhafte Ausgestaltung der erfindungsgemäßen Einrichtung besteht ferner darin, gemäß Anspruch 14, Dosiervorrichtungen zur Einstellung des Drucks des Flüssigkeitsstrahls, der Impulsfrequenz bei pulsierendem Strahl und des Mischungsverhältnisses der verwendeten Flüssigkeiten (z.B. Weinsteinsäure und Natriumcarbonat) ggf. mit hinzugefügten Chemikalien vorzusehen.

Eine vorteilhafte Ausführung der erfindungsgemäßen Einrichtung besteht weiterhin in der Bereitstellung unterschiedlicher Ausführungsformen von Spritzdüsen gemäß Anspruch 15, z.B. für die Abgabe von Einzel- und Vielfachstrahlen als Dusche oder Spray. Damit ist insgesamt für jede Indikation eine optimale Behandlungsmöglichkeit zur Verfügung gestellt.

Besonders günstig ist es dabei, entsprechend Anspruch 16 einen Programmwähler vorzusehen, mit dessen Hilfe eine stets exakte, dem jeweiligen (vorzugsweise angezeigten) Münzwert entsprechende Dosierung ermöglicht ist, wodurch insbesondere auch schädliche Langzeitwirkungen durch häufige manuelle Überdosierung wirksam vermeidbar ist.

Durch eine Fehlbedienungssperre nach Anspruch 17 sind in vorteilhafter Weise Beschädigungen der Einrichtung durch ungewollte Fehlbedienung sicher auszuschließen.

Entscheidend wichtig für eine hohe Betriebsbereitschaft der erfindungsgemäßen Einrichtung ist das ständige Vorhandensein der verbrauchbaren Pflegemittel (Spritzdüsen, Flüssigkeiten, Chemikalien) ggf. von Wechselgeld, sowie die Funktionstüchtigkeit der einzelnen Bestandteile. Es ist daher besonders vorteilhaft, mittels einer Funktionskontrolleinrichtung nach Anspruch 18 zur rechtzeitigen Ersatzbeschaffung das Zuendegehen des Vorrates der Pflegemittel angezeigt zu bekommen und durch sofortige Signalisierung von Funktionsstörungen diese umgehend beheben lassen zu können.

Eine fast vollständige Verfügbarkeit der Zahn- und Mundpflegeeinrichtung ist erreichbar durch direkte Übermittlung der Kontrollwerte an den Betreiber oder Vermieter gemäß Anspruch 19, der daraufhin sofort Ersatz beschaffen bzw. Reparaturen veranlassen kann.

Mit Hilfe einer in Anspruch 20 beschriebenen Ausstattung der Erfindung ist ein unbefugtes, leicht zu Beschädigungen führendes Herausziehen des Schlauches aus dem Gehäuse einfach und wirksam vermieden.

Trotzdem versuchte auch anderweitige Beschädigungen der Einrichtung (z.B. durch Einbruch in den Münzschalter) sind weitgehend durch eine Abschreckung des potentiellen Täters mit Hilfe einer Alarmeinrichtung zu verhindern (Anspruch 21).

Die Verwendung von auf Mundtemperatur erwärmten Flüssigkeiten nach Anspruch 22 macht die Behandlung nicht nur angenehmer und erhöht überdies die Bereitschaft hierzu, sondern vermeidet auch Schmerzen bei temperaturempfindlichen Zähnen, wie sie bei sehr vielen Menschen vorkommen.

Eine besonders unkomplizierte, wirklich für jedermann verständliche Durchführung der einzelnen Maßnahmen bzw. Handgriffe, auch in der richtigen Reihenfolge, ist gemäß Anspruch 23 auf einfache Weise durch Schaubilder erreicht, auf denen die jeweilige Maßnahme beleuchtet angezeigt wird. Damit ist überdies eine minimale Zeitdauer der Behandlung gewährleistet. Bei einer automatisch arbeitenden erfindungsgemäßen Einrichtung können z.B. folgende Schritte nacheinander angezeigt werden:

– Programm wählen
– x-Geldstück einwerfen

– Spritzdüse am Griffteil aus der Gehäuseöffnung ziehen,

– Mundstück in den Mund einführen,

– Schalter "Pumpe ein" drücken,

– Spritzdüse zum Einzug in das Gehäuse freigeben.

Für den überwiegenden Teil der Anwendungsfälle ist es besonders günstig, alle vorhandenen Teile der erfindungsgemäßen Zahn- und Mundpflegeeinrichtung nach Anspruch 24 in einem kompakten Gerät zusammenzufassen, das damit einfacher in Lagerhaltung, Lieferung, Aufstellung, Anschluß (nur noch Netz- und Wasseranschluß) und Wartung ist.

Wenn diese Geräteeinheit in Waschräumen aufgestellt werden soll, können dort bereits vorhandene Spülbecken und Spiegel mitbenutzt werden. An anderen Aufstellungsorten ist es für eine einwandfreie Durchführung der Behandlung besonders günstig, wenn gemäß Anspruch 25 die Geräteeinheit zusätzlich bereits mit einem Waschbecken und einer Entsorgungseinrichtung für die gebrauchte Flüssigkeit, sowie – für ein Höchstmaß an Sicherheit ggf. mit einem rutschfesten Boden ausgerüstet ist. Ein in der Höhe verstellbares und seitlich schwenkbares Waschbecken erhöht dabei noch den Komfort durch die Anpaßbarkeit an unterschiedliche Körpergrößen der Benutzer und deren Platzbedarf als Rechts- oder Linkshänder.

Im Einzelfall kann es vorkommen (z.B. auf Baustellen), daß die Geräteeinheit an zeitlich wechselnden Orten aufzustellen ist. Dazu vereinfacht eine Ausstattung auch Anspruch 26 den Transport wesentlich.

Bei Betrieb einer Vielzahl erfindungsgemäßer Einrichtungen bzw. Geräteeinheiten z.B. in Großfirmen, kann eine Verknüpfung aller Funktionskontrolleinrichtungen in einer computergesteuerten Zentrale gemäß Anspruch 27 trotz des erhöhten Aufwandes durch schnelle Reaktion auf Schadensfälle und zur Neige gehende Pflegemittel erhebliche Kostenersparnisse bringen und die Verfügbarkeit der Einzelgeräte wesentlich erhöhen.

Die Erfindung ist nachstehend anhand der Zeichnungen beispielsweise näher erläutert. Dabei zeigen

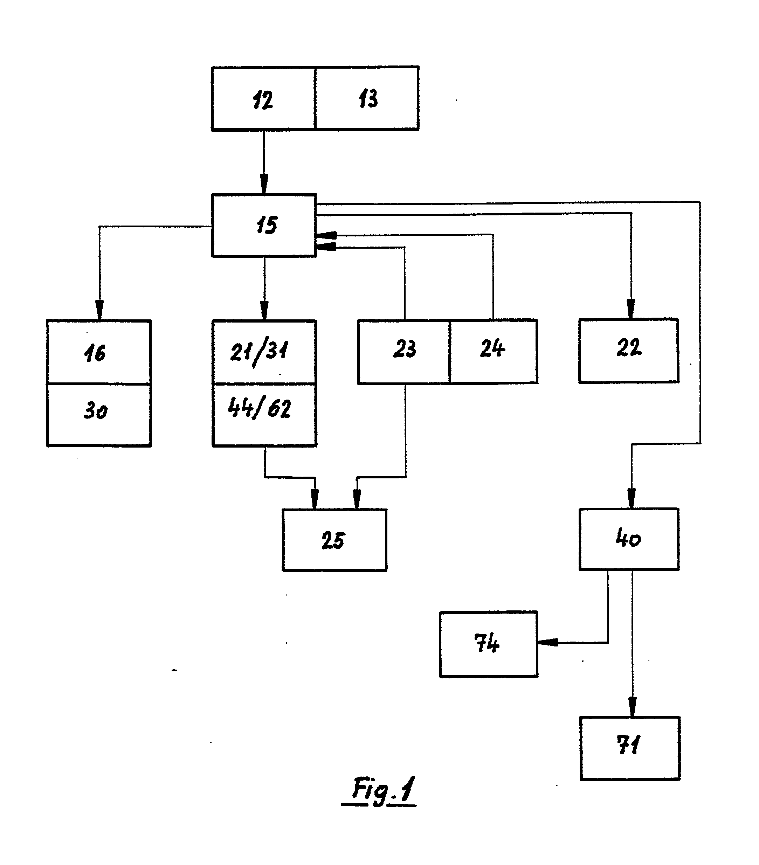

Fig. 1 eine schematische Blockdarstellung des prinzipiellen Aufbaus der Munddusche einer erfindungsgemäßen Zahn- und Mundpflegeeinrichtung,

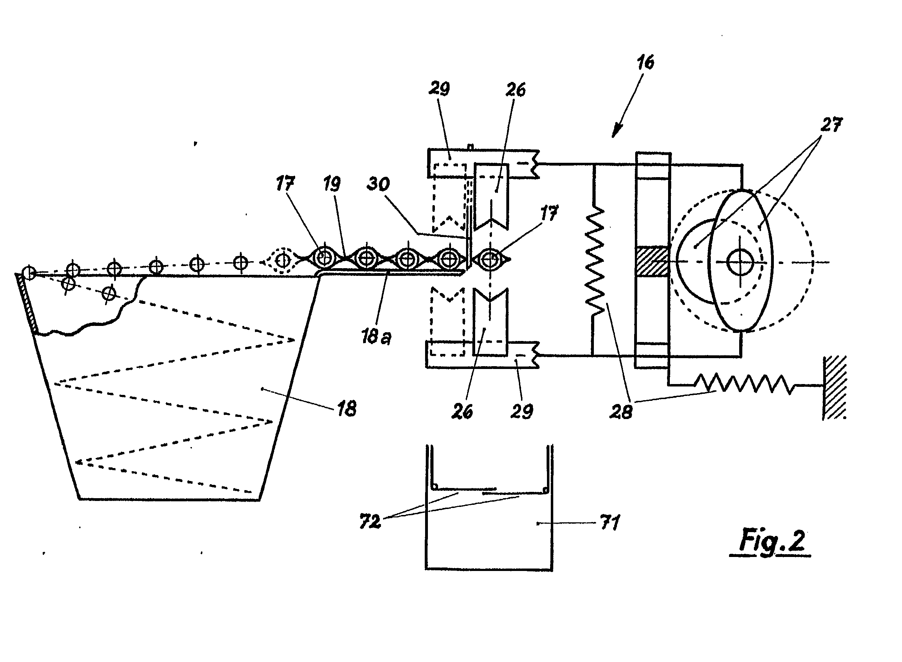

Fig. 2 eine schematische Darstellung der Fördereinrichtung,

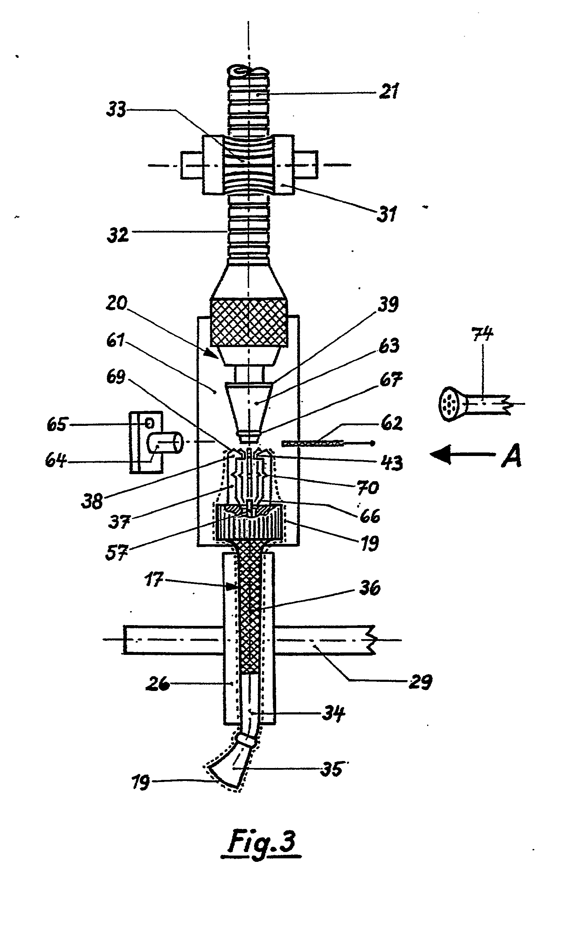

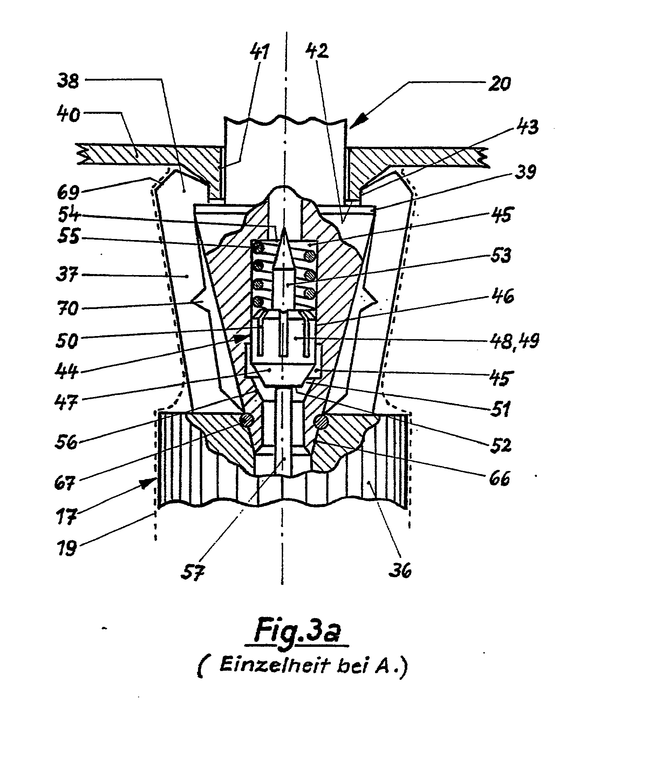

Fig. 3 eine schematische Darstellung von Schlauch und Spritzdüse im gelösten Zustand, sowie der Vorrichtung zu Ihrer Verbindung,

Fig. 3a eine Ausschnittvergrößerung der miteinander verbundenen Teile von Schlauchanschlußstück und Spritzdüse im Schnitt,

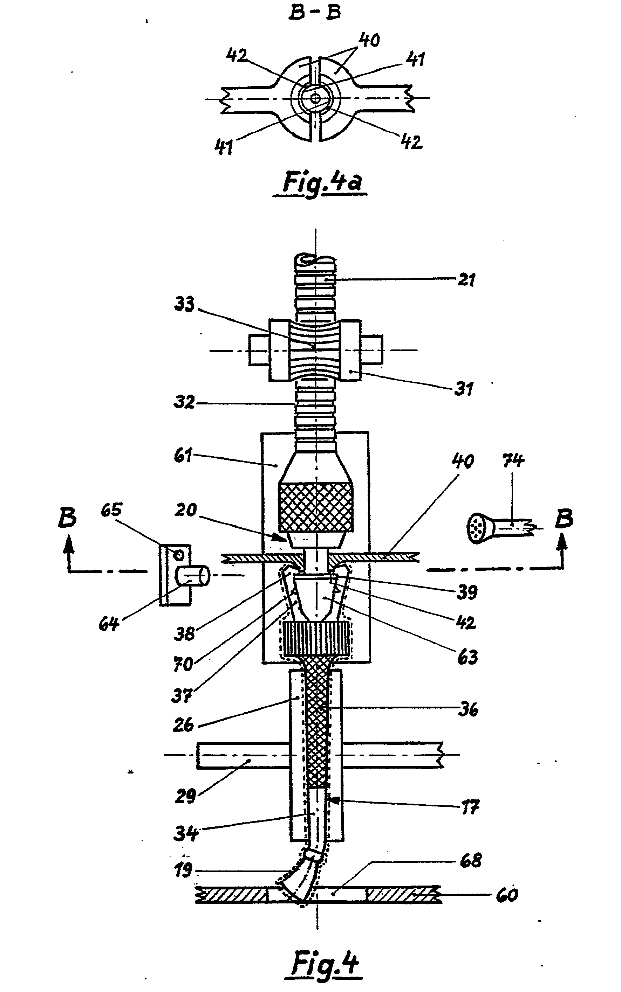

Fig. 4 eine schematische Darstellung von Schlauch und Spritzdüse im miteinander verbundenen Zustand, sowie der Vorrichtungen zu deren Verbinden und Lösen,

Fig. 4a eine Teilansicht der Lösevorrichtung durch Schnitt B–B und

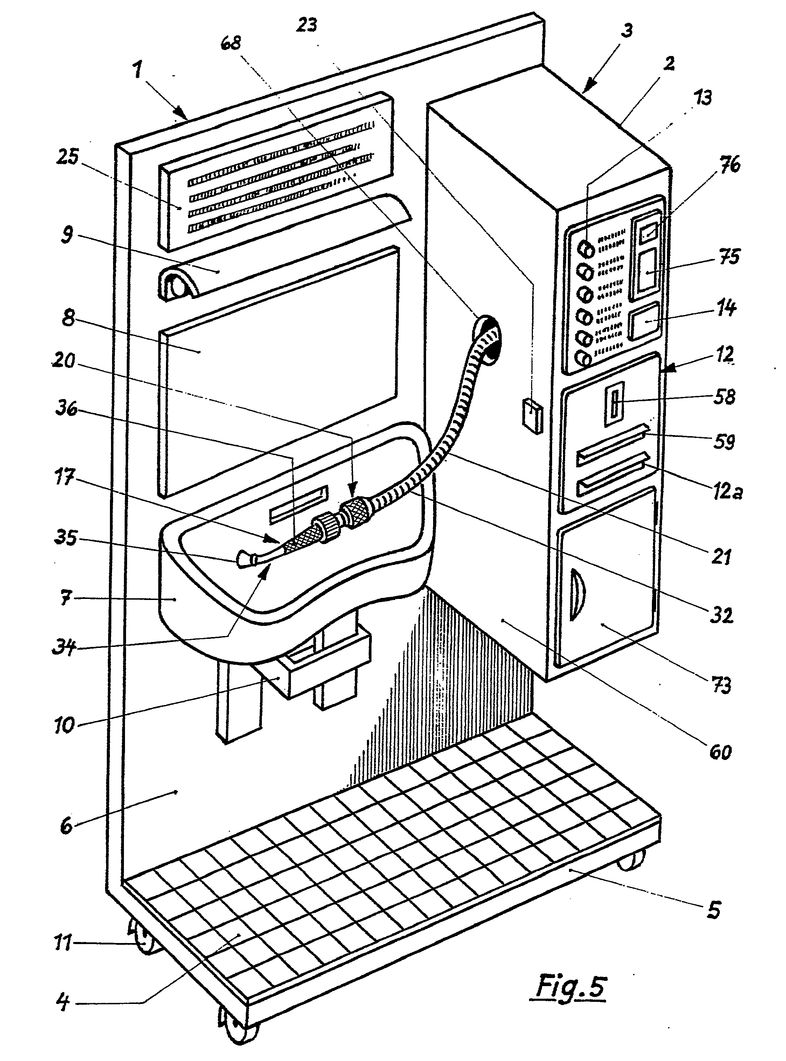

Fig. 5 eine perspektivische Ansicht des Prinzipaufbaus einer erfindungsgemäßen Zahn- und Mundpflegeeinrichtung als Geräteeinheit.

Die Zahn- und Mundpflegeeinrichtung 1 besteht aus einer in einem Gehäuse 3 angeordneten Munddusche 3, einem mit einem rutschfesten Belag 4 versehenen Boden 5, einer damit fest verbundenen Wand 6, sowie – daran angebracht – einem Waschbecken 7, einem Spiegel 8 und einer Beleuchtung 9. Das Waschbecken 7 ist durch eine Vorrichtung 10 schwenkbar und in der Höhe verstellbar und kann somit jederzeit mühelos den körperlichen Gegebenheiten des Benutzers angepaßt werden.

Munddusche 3, Boden 5 und Wand 6 mit Waschbecken 7, Spiegel 8 und Beleuchtung 9 bilden eine mechanisch stabile Geräteeinheit mit nicht dargestelltem Wasser- und Stromanschluß, die durch feststellbare Rollen 11 an der Unterseite des Bodens 5 ohne großen Kraftaufwand bzw. besondere Hilfsmittel beweglich und damit gut für den Einsatz an wechselnden Aufstellorten geeignet ist.

Die Munddusche 3 besteht aus folgenden Einzelteilen bzw. -geräten:

– einem Münzschalter 12 zur Aufnahme gültiger Münzen und 10-DM-Geldscheine mit einer Geldrückgabeeinrichtung 12a für Überzahlungen und einer auf Eingabe von Falschgeld, Bedienungs- oder Funktionsfehler ansprechenden Geldannahmesperre,

– einem Programmwähler 13, an dem durch Tastendruck eine Reihe unterschiedlicher Behandlungsprogramme z.B. für das im Einzelfall angemessene Mischungsverhältnis der Reinigungs- bzw. Pflegeflüssigkeiten, die richtige Behandlungsdauer und/oder den optimalen Druck des Flüssigkeitsstrahls einstellbar sind, wobei entsprechend dem gewählten Programm eine Anzeigeeinrichtung 14 die zu zahlende Geldmenge angibt,

– einem vom Münzschalter 12 und/oder Programmwähler 13 aktivierbaren Steuergerät 15 zur Steuerung

– einer Fördereinrichtung 16 zum Bereitstellen einer Spritzdüse 17 für jede Behandlung aus einem Vorratsbehälter 18 mit Auflagetisch 18a, in dem die Spritzdüsen 17 in einem Folienband 19, parallel zueinander einzeln eingeschweißt, gelagert sind,

– einer Vorrichtung zum steckbaren Rastverbinden einer Spritzdüse 17 mit einem Schlauchanschlußteil 20 eines zum Transport der Pflegeflüssigkeit vorgesehenen flexiblen Schlauches 21, sowie zum Einziehen dieser Einheit 17, 20, 21 in das Gehäuse 2 nach beendeter Behandlung,

– einer Vorrichtung zum Lösen der Rastverbindung von Spritzdüse 17 und Schlauchanschlußteil 20,

– einer Pumpe 22 zum Bereitstellen der Pflegeflüssigkeit aus zwei Vorratsbehältern, die ebenso wie eine Heizeinrichtung zur Flüssigkeitserwärmung auf Mundtemperatur, diverse weitere Motoren und Ventile, Druckregler, Filter, Leckfühler, Überdruckschalter, ein Kompressor und eine Flüssigkeits-Dosier- und -Mischeinrichtung als für die Erfindung unwesentliche Teile der besseren Übersichtlichkeit halber in den Figuren nicht dargestellt sind,

– einem Taster 23 zum manuellen Einschalten der Pumpe 22, nachdem die Spritzdüse 17 in die Mundhöhle eingeführt ist,

– einem Zeitschalter 24, der nach Ablauf einer durch die Programmwahl eingestellten Behandlungszeitdauer die Pumpe 22 über das Steuergerät 15 abschaltet und

– einer Schaubildanzeige 25, auf der die vom Benutzer vorzunehmenden Maßnahmen bzw. Handgriffe beleuchtet angezeigt werden.

Die Fördereinrichtung 16 besteht aus zwei Klemmbacken 26, die – gesteuert von einem motorischen Antrieb mit Doppelexzenter 17 und Rückholfedern 28 – auf zueinander parallelen, zur Achse der Spritzdüse 17 senkrechten Gleitschienen 29 in horizontaler Richtung und zusammen mit dem Gleitschienen 29 in vertikaler Richtung gegeneinander bewegbar sind, sowie einem Trennmesser 30 zum Abtrennen einer eingeschweißten Spritzdüse 17 vom Folienband 19.

Sie Vorrichtung zum Verbinden der Spritzdüse 17 mit dem Schlauchanschlußteil 20 und zum Einziehen des Schlauches 21 zusammen mit dieser Einheit 17, 20 ist ein motorischer Führungsrollenantrieb mit zwei unter 180° zueinander versetzt am Schlauchumfang angreifenden Führungsrollen 31 mit einer nicht dargestellten Rutschkupplung, wobei zur Erhöhung der Traktion die Schlauchoberfläche quer zur Achse verlaufende Rillen 32 aufweist, in die die Führungsrollen 31 mit angepaßten Umfangsrippen 33 eingreifen.

Die Spritzdüsen 17 bestehen jeweils aus einem rohrförmigen Mundstück 34 mit zur besseren Erreichbarkeit aller Zahn- bzw. Mundbereiche mit dem Flüssigkeitsstrahl gekröpftem Endteil 35, sowie einem damit einstückigen, rohrförmigen Griffteil 36, das am freien Ende einen Kranz von radial federnden Fingern 37 aufweist die bei geschlossener Rastverbindung mit nach innen gerichteten Rastnasen 38 einen Ringbund 39 des Schlauchanschlußteils 20 hintergreifen.

Die Vorrichtung zum Lösen der Rastverbindung, also zum Lösen der gebrauchten Spritzdüsen 17 vom Schlauchanschlußteil 20, besteht aus zwei unter 180° zueinander angeordneten, radial beweglichen und axial etwas federnden Abzugsbacken 40, deren einander zugewandte halbkreisförmige Stirnkanten 41 jeweils einen halbringförmigen Ansatz 42 zum Hintergreifen der Innenflächen 43 der Rastnasen 38 der Finger 37 aufweisen.

Zur Vermeidung unbeabsichtigten Flüssigkeitsaustritts aus dem Schlauchanschlußteil 20 bei nicht aufgesteckter Spritzdüse 17 ist im Schlauchanschlußteil 20 ein Ventil 44 vorgesehen, daß aus einem in einer zylindrischen Ausnehmung 45 des Schlauchanschlußteiles 20 axial beweglichen Sperrglied 46 besteht, welches ein kegelstumpfförmiges Stirnteil 47 und ein damit einstückiges hohlzylindrisches Führungsteil 48 aufweist, dessen Wand 49 mit Längsschlitzen 50 versehen ist, um auch bei geringem Durchmesser-Unterschied (gute Führung) von Führungsteil 48 und Ausnehmung 45 einen ausreichenden Flüssigkeitsdurchsatz zu gewährleisten.

Bei geschlossenem Ventil 44 wird der konische Teil 51 der Stirnfläche 52 des Stirnteils 47 mittels einer auf einem zentrischen Zapfen 53 des Sperrgliedes 46 aufgebrachten, sich an der inneren Stirnfläche 54 der Ausnehmung 45 abstützenden Druckfeder 55 gegen eine daran angepaßte konische Fläche 56 am offenen Ende der Ausnehmung 45 gepreßt. Zum Öffnen des Ventils 44 ist im Griffteil 36 ein Dorn 57 vorgesehen, der beim Zusammenstecken von Spritzdüse 17 und Schlauchanschlußteil 20 gegen die Stirnfläche 52 drückt und dadurch das Sperrglied 46 gegen die Kraft der Druckfeder 55 zurückschiebt.

Mit den beschriebenen Teilen arbeitet die Munddusche 3 nach folgendem Funktionsablauf:

Nach dem Einstellen der für ihn optimalen Position des Waschbeckens 7 mit der Verstellvorrichtung 10 (sofern erforderlich) wählt der Benutzer am Programmwähler 13 durch Tastendruck das gewünschte Zahn- und Mundpflegeprogramm und gibt den daraufhin an der Geldmengenanzeige 14 angegebenen Geldbetrag durch Einwurf einer entsprechenden Anzahl von Geldstücken in einen Münzschlitz 58 oder durch Einschieben eines 10-DM-Scheines in eine Geldscheinöffnung 59 – beide in der Gehäusewand 60 angeordnet – in den Münzschalter 12 ein. Dadurch wird zunächst über das Steuergerät 15 die am Anfang des Folienbandes 19 positionierte Spritzdüse 17 zwischen den beiden Klemmbacken 26 der Fördereinrichtung 16 fixiert und über den Auflagetisch 18a in die Steck-Sollposition transportiert, in der sich dann die Spritzdüse 17 und das Schlauchanschlußteil 20 axial fluchtend mit ihren steckseitigen Endteilen auf einer Auflage 61 gegenüberliegen und das Trennmesser 30 das Folienband 19 so durchtrennt, daß die nächstfolgende Spritzdüse noch einwandfrei dicht verpackt ist. Daraufhin wird der steckseitige Endbereich, der die geklemmte Spritzdüse 17 noch umgebenden Folienhülle mittels eines Heizdrahtes 62 durch Abschmelzen entfernt, so daß die Stecköffnung des Griffteils 36 der Spritzdüse 17 für den Steckvorgang frei ist.

Anschließend schaltet das Steuergerät 15 den Führungsrollenantrieb in Ausfahrrichtung ein, wodurch das Schlauchanschlußteil 20 mit seinem konisch verjüngten Endabschnitt 63 so weit in das steckseitige Endteil des Griffteils 36 eingeführt wird, bis die Rastnasen 38 der radial aufgespreizten Finger 37 den Ringbund 39 des Schlauchanschlußteiles 20 hintergreifen und die Rutschkupplung wirksam wird.

In diesem gesteckten Zustand, dessen exaktes Vorliegen durch einen Sensor 64 mit Kontrolleuchte 65 überwacht wird, ist durch einen gegen eine konische Innenfläche 66 des Griffteils 36 gepreßten Dichtring 67 eine druckwasserdichte Verbindung von Spritzdüse 17 und Schlauch 21 hergestellt, wobei das im Schlauchanschlußteil 20 angeordnete Ventil 44 in der oben beschriebenen Weise durch den das Sperrglied 46 zurückschiebenen Dorn 57 geöffnet wird.

Die Klemmbacken 26 der Fördereinrichtung 16 geben nunmehr die Spritzdüse 17 frei und werden durch die Fördereinrichtung 16 in ihre Ausgangslage ober- und unterhalb der im Folienband nächstfolgenden Spritzdüse 17 gebracht. Durch den bei gelösten Klemmbacken 26 wieder einsetzenden Schlauchvortrieb wird die Spritzdüse 17 weitertransportiert, bis sie vollständig durch eine Öffnung 68 im Gehäuse 2 (Entnahmeposition) aus diesem hervorragt, wonach der Führungsrollenantrieb abgeschaltet wird.

Der Benutzer erhält nun auf der Schaubildanzeige 25 nacheinander die Anweisung, die restliche Folienhülle von der Spritzdüse 17 von Hand abzuziehen und in einen bereitgestellten Mülleimer zu werfen, die Spritzdüse 17 am Griffteil 36 zu fassen, das Mundstück 34 in die Mundhöhle einzuführen und dann mit dem Taster 23 die Pumpe 22 einzuschalten. Die richtige Anwendung der Spritzdüse 17 zur optimalen Reinigung und Pflege der Zähne und des Zahnfleisches ist einer schriftlichen Anweisung entnehmbar, kann jedoch selbstverständlich auch als optische Anzeige an der Zahn- und Mundpflegeeinrichtung vorgesehen sein.

Nach Ablauf der entsprechend dem gewählten Programm eingestellten Behandlungsdauer wird die Pumpe 22 über den Zeitschalter 24 automatisch abgeschaltet. Über die Schaubildanzeige 25 wird der Benutzer nun aufgefordert, die Spritzdüse 17 nach Beendigung der Flüssigkeitszufuhr aus dem Mund zu nehmen und den Schlauch 21 wieder so weit in das Gehäuse 2 zurückzuschieben, bis die Spritzdüse 17 in der Entnahmeposition angelangt ist. Dabei wird durch einen nicht dargestellten, mechanisch betätigten Schalter der Führungsrollenantrieb in Einzugsrichtung in Gang gesetzt, wodurch der Schlauch 21 selbsttätig soweit in das Gehäuse 2 zurückgezogen wird, bis die Spritzdüse 17 mit dem ankoppelten Schlauchanschlußteil 20 wieder auf der Auflage 61 aufliegt. Danach wird der Führungsrollenantrieb automatisch abgeschaltet.

Anschließend werden die beiden Abzugsbacken 40 der Lösevorrichtung durch einen nicht dargestellten eigenen Motorantrieb radial aufeinander zubewegt, bis die halbringförmigen Ansätze 42 nach axial federndem Ausweichen an den hierzu konisch angefassten Stirnkanten 69 der Finger 37 die Innenflächen 43 der Rastnasen 38 hintergreifen. Durch anschließendes radiales Auseinanderbewegen der Abzugsbacken 40 werden die Finger 37 derart weit aufgespreizt, daß sie an Sollbruchstellen 70 entweder abbrechen oder sich weiter stark nach außen aufbiegen. Dadurch wird die nunmehr axial frei bewegliche Spritzdüse 17 durch die unter dem Druck der Feder 55 gegen den Dorn 57 gepreßte Stirnfläche 52 des Sperrgliedes 46 sicher abgestoßen und fällt dabei auf den Deckel eines Abfallbehälters 71. Dieser ist aus zwei sich überlappenden Kunststofflaschen 72 gebildet, die so nach innen schwenkbar gelagert sind, daß sie sich bereits unter dem Gewicht der leichten Spritzdüsen 17 öffnen und nach deren Durchfallen wieder schließen. Auf diese Weise ist mit einfachen Mittel eine automatische Entsorgung mit Bakteriensperre erreicht. Im Innern des Abfallbehälters 71 ist zur direkten Aufnahme des Abfalls ein über eine Gehäusetüre 73 mühelos entfernbarer Plastiksack angeordnet, so daß der Abfallbehälter 71 selbst nicht desinfiziert werden muß.

Zum Schluß wird noch der Schlauchanschlußstutzen 20, mit dem ein Benutzer bei herausgezogenem Schlauch 21 in Berührung kommen könnte, mit Hilfe eines aus einem Sprayautomaten 74 abgegebenen Desinfektionsmittels keimfrei gemacht. Die Zahn- und Mundpflegeeinrichtung 1 ist damit für eine weitere Benutzung bereit.

Das Absinken des Restbestandes an Pflegemitteln unter eine vorgegebene Grenze sowie der Ausfall oder Fehlfunktionen von Geräteteilen werden durch eine im Gehäuse 2 der Munddusche 3 eingebaute Funktionskontrolleinrichtung 75 überwacht und mittels Kontroll-Leuchten 76 angezeigt.

Die Erfindung wurde anhand eines bevorzugten Ausführungsbeispiels beschrieben. Dem Fachmann sind jedoch zahlreiche Abwandlungen und Ausgestaltungen der Erfindung und des beschriebenen Ausführungsbeispiels möglich, ohne daß dadurch der Erfindungsgedanke verlassen wird. So ist es beispielsweise auch denkbar, die beiden verwendeten Flüssigkeiten durch Beimischung von Luft unter Druck aus der Spritzdüse als Spray austreten zu lassen, welches $CO_2$ in statu nascendi als für die Zahnfleischpflege besonders wichtigen Bestandteil enthält. Weiterhin ist es beispielsweise auch möglich, zum Abschmelzen des steckseitigen Endbereichs der die Spritzdüse 17 umgebenden Folienhülle anstelle eines Heizdrahtes eine Heizfläche oder einen Heißluftstrahl zu verwenden.

Das beschriebene Ausführungsbeispiel einer erfindungsgemäßen Zahn- und Mundpflegeeinrichtung zeichnet sich vor allem durch seine besondere Eignung zum funktionssicheren Dauereinsatz an beliebigen Standorten mit Strom- und Wasseranschluß und – aufgrund des einfachen Aufbaus und der unkomplizierten Bedienung – zur Benutzbarkeit durch jedermann bei Wahrung größtmöglicher Hygiene aus.

**Patentansprüche**

1. Einrichtung zur Zahn- und Mundpflege mit einer Munddusche (3), bei der mittels einer Pumpe (22) eine insbesondere medizinisch wirksame Flüssigkeit über einen beweglichen, aus einem Gehäuse (2) herausziehbaren Schlauch (21) einer damit über ein Anschlußteil lösbar verbindbaren, aus einem Griffteil (36) und einem Mundstück (34) gebildeten Spritzdüse (17) zuführbar und davon als vorzugsweise pulsierender Ein- oder Mehrfachstrahl abgebbar ist, dadurch gekennzeichnet, daß eine Vielzahl von als Einwegteile in zumindest keimarmer Einzelverpackung ausgebildeten Spritzdüsen (17) in wenigstens einem Vorratsbehälter (18) gelagert und ein Münzschalter (12) vorgesehen ist, mit dem über ein Steuergerät (15) durch Eingabe eines Geldbetrages nacheinander

– jeweils eine Spritzdüse (17) aus dem wenigstens einen Vorratsbehälter (18) mittels einer Fördereinrichtung (16) bereitgestellt,
– die Verpackung zumindest am steckseitigen Ende der Spritzdüse (17) mittels einer Ablösevorrichtung (62) entfernt,
– die Spritzdüse (17) und das Schlauchanschlußteil (20) von einer Vorrichtung (31) selbsttätig rastend zusammengesteckt,

— die Pumpe (22) zur Flüssigkeitszufuhr eingeschaltet und nach Ablauf einer dem Münzwert entsprechenden Zeit von einem Zeitschalter (24) wieder abgeschaltet und

— die Rastverbindung nach Gebrauch der Munddusche (3) mittels einer weiteren Vorrichtung (40) selbsttätig gelöst wird.

2. Einrichtung nach Anspruch 1, dadurch gekennzeichnet, daß ein Taster (23) zum manuellen Einschalten der Pumpe (22) nach dem Verbinden von Spritzdüse (17) und Schlauchanschlußteil (20) vorgesehen ist.

3. Einrichtung nach Anspruch 1 oder 2, dadurch gekennzeichnet, daß ein Sensor (64) mit Kontrollanzeige (65) zur optischen Überwachung des Steckbereiches von Spritzdüse (17) und Schlauchanschlußteil (20) vorgesehen ist, der nur bei richtig erfolgter Rastverbindung das Einschalten der Pumpe (22) ermöglicht.

4. Einrichtung nach Anspruch 2 oder 3, dadurch gekennzeichnet, daß die Vorrichtung zum Verbinden von Spritzdüse (17) und Schlauchschlußteil (20) aus folgenden Teilen besteht:

— einem Paar, das Griffteil (36) der Spritzdüse (17) umfassender, auf zwei zueinander parallelen und zur Achse der Spritzdüse (17) senkrechten Gleitschienen (29) angeordneter Klemmbacken (26) zum Fassen und Transportieren der Spritzdüse (17) aus der Lagerposition in die Steck-Sollposition mittels eines motorisch angetriebenen Doppel-Exzenters (27) mit Rückholfedern (28),

— einem Führungsrollenantrieb (31) zur axialen Verschiebung des Schlauches (21), wobei die Schlauchoberfläche vorzugsweise mit Rillen (32) ausgestattet ist, in die Umfangsrippen (33) der Führungsrollen (31) eingreifen,

— einer Auflage (61) zur vertikalen Positionierung von Schlauchanschlußteil (20) und Spritzdüse (17).

5. Einrichtung nach einem der Ansprüche 1 bis 3, dadurch gekennzeichnet, daß die Vorrichtung zum Lösen der Rastverbindung, bei der am Umfang des steckseitigen Endteils der Spritzdüse (17) verteilte radial federnde Finger (37) mit Rastnasen (38) einen Ringbund (39) des Schlauchanschlußteils (20) hintergreifen, aus zwei radial gegeneinander bewegbaren Abzugsbacken (40) besteht, die mit je einer halbkreisförmiges Stirnkante (41) das Schlauchanschlußteil (20) vollständig umfassen, und die zum radialen Auseinanderziehen der Finger (37) mit von den Stirnkanten (41) abragenden halbringförmigen Ansätzen (42) Innenflächen (43) der Rastnasen (38) hintergreifen.

6. Einrichtung nach Anspruch 5, dadurch gekennzeichnet, daß die Finger (37) eine Sollbruchstelle (70) aufweisen.

7. Einrichtung nach einem der Ansprüche 1 bis 6, dadurch gekennzeichnet, daß im Schlauchanschlußteil (20) ein Ventil (44) angeordnet ist, dessen axial bewegliches Sperrglied (46) bei nicht angeschlossener Spritzdüse (17) mittels einer Druckfeder (55) gegen eine daran angepaßte Fläche (56) des Schlauchanschlußteils (20) angepreßt ist und beim Aufstecken der Spritzdüse (17) durch einen in dieser fest angebrachten Dorn (57) zum öffnen des Ventils (44) gegen die Kraft der Druckfeder (55) zurückgeschoben wird.

8. Einrichtung nach einem der Ansprüche 1 bis 7, dadurch gekennzeichnet, daß zur Entsorgung der gebrauchten, vom Schlauchanschlußteil (20) getrennten Spritzdüsen (17) ein Abfallbehälter (71) mit einer Deckelöffnung vorgesehen ist, die sich nach dem Durchfallen der Spritzdüsen (17) selbsttätig verschließt.

9. Einrichtung nach einem der Ansprüche 1 bis 8, dadurch gekennzeichnet, daß die Spritzdüsen (17) einzeln mit gegenseitigem Abstand voneinander in einem Folienband (19) eingeschweißt sind.

10. Einrichtung nach Anspruch 9, dadurch gekennzeichnet, daß eine Vorrichtung zum Abtrennen einer verschweißten Spritzdüse (17) vom Folienband (19) vorgesehen ist.

11. Einrichtung nach Anspruch 10, dadurch gekennzeichnet, daß die Abtrennvorrichtung als Trennmesser (30) ausgebildet und Teil der Fördereinrichtung (16) ist.

12. Einrichtung nach einem der Ansprüche 1 bis 11, dadurch gekennzeichnet, daß eine vorzugsweise als Heizstab (62) ausgebildete Ablösevorrichtung zum Entfernen des steckseitigen Endteils der die Spritzdüse (17) umgebenden Folienhülle vorgesehen ist.

13. Einrichtung nach einem der Ansprüche 1 bis 12, dadurch gekennzeichnet, daß eine Sprayvorrichtung (74) zum Besprühen des Schlauchanschlußteils (20) mit Desinfektionsmittel nach jedem Abkuppeln einer gebrauchten Spritzdüse (17) vorgesehen ist.

14. Einrichtung nach einem der Ansprüche 1 bis 13, dadurch gekennzeichnet, daß Dosiervorrichtungen vorgesehen sind, mit denen der Druck des Flüssigkeitsstrahles, bei pulsierendem Strahl dessen Impulsfrequenz, bei gleichzeitiger Abgabe mehrere Flüssigkeiten deren Mischungsverhältnis und bei Zugabe von Gasen und/oder Chemikalien deren Menge einstellbar ist.

15. Einrichtung nach einem der Ansprüche 1 bis 14, dadurch gekennzeichnet, daß in getrennten Vorratsbehältern unterschiedliche, verschiedenen Behandlungszwecken angepaßte Ausführungsformen von Spritzdüsen vorgesehen sind.

16. Einrichtung nach Anspruch 14 oder 15, dadurch gekennzeichnet, daß der Münzschalter (12) einen Programmwähler (13) aufweist, mit dem die unterschiedlichen Dosierungen und/oder Spritzdüsen über das Steuergerät (15) automatisch einstellbar bzw. auswählbar sind.

17. Einrichtung nach Anspruch 16, dadurch gekennzeichnet, daß der Programmwähler (13) mit einer Fehlbedienungssperre und -anzeige ausgestattet ist.

18. Einrichtung nach einem der Ansprüche 1 bis 17, dadurch gekennzeichnet, daß eine Funktionskontrolleinrichtung (75) mit Kontrolleuchten (76) zur Anzeige eines Restbestandes an Flüssigkeiten, Chemikalien und ggf. Gasen sowie des Ausfalls von Geräteteilen vorgesehen ist.

19. Einrichtung nach Anspruch 18, dadurch gekennzeichnet, daß die Funktionskontrolleinrichtung mit einer parallelen Anzeige oder Alarmeinrichtung beim Betreiber bzw. Vermieter verbunden ist.

20. Einrichtung nach einem der Ansprüche 1 bis 19, dadurch gekennzeichnet, daß eine Schlaucharretierung vorgesehen ist, die durch Eingabe des richtigen Geldbetrages in den Münzschalter freigegeben wird und nach Ablauf der Behandlungszeit wieder eingreift.

21. Einrichtung nach einem der Ansprüche 1 bis 20, dadurch gekennzeichnet, daß eine Alarmeinrichtung vorgesehen ist, die bereits bei versuchter Beschädigung der Einrichtung (1) ein Alarmsignal abgibt.

22. Einrichtung nach einem der Ansprüche 1 bis 21, dadurch gekennzeichnet, daß die Flüssigkeit bzw. die Flüssigkeitsmischung oder die Flüssigkeits-Gas-Mischung durch eine Vorwärmeinrichtung auf etwa Mundhöhlentemperatur vorgewärmt ist.

23. Einrichtung nach einem der Ansprüche 1 bis 22, dadurch gekennzeichnet, daß eine Schaubildanzeige (25) vorgesehen ist, auf der nacheinander die vom Benutzer erforderlichen Maßnahmen angezeigt werden.

24. Einrichtung nach einem der Ansprüche 1 bis 23, dadurch gekennzeichnet, daß die Munddusche (3) inklusive Münzschalter (12), Steuergerät (15), Taster (23), Pumpe (22), Zeitschaltuhr (24), sowie ggf. Programmwähler (13), Vorratsbehälter, Auftrennvorrichtungen (30, 62), Verbindungs- und Lösevorrichtung (31, 40), Abfallbehälter (71, Überwachungssensor (64), Sprayvorrichtung (74), Dosier- und Mischvorrichtung, Funktionskontrolleinrichtung (75), Fehlbedienungssperre, Schlaucharretierung, Vorwärmeinrichtung und Alarmeinrichtung eine Geräteeinheit bilden.

25. Einrichtung nach Anspruch 24, dadurch gekennzeichnet, daß die Geräteeinheit zusätzlich mit einem vorzugsweise seitlich schwenkbaren und in der Höhe verstellbaren Waschbecken (7), einer Einrichtung zur Entsorgung der gebrauchten Flüssigkeiten und einem rutschfesten Boden (4, 5) ausgestattet ist.

26. Einrichtung nach Anspruch 25, dadurch gekennzeichnet, daß an der Unterseite des Bodens (5) feststellbare Rollen (11) vorgesehen sind.

27. Einrichtung nach Anspruch 18 oder 19, dadurch gekennzeichnet, daß die Funktionskontrolleinrichtung (75) zusammen mit den Funktionskontrolleinrichtungen mehrerer von einander unabhängiger Einrichtungen zur Zahn- und Mundpflege mit einer Computerzentrale verbunden sind.

## Claims

1. A dental and oral hygiene device with an oral rinsing device (3) where, by means of a pump (22), a particularly medically active liquid can be supplied via a movable hose (21) which can be pulled out of a housing (2) and which is removably attached via a connector to a spray nozzle (17) consisting of a grip section (36) and a mouthpiece (34), which liquid can be dispensed, preferably as a pulsating single or multiple stream, characterized in that a plurality of single use spray nozzles (17) in at least germ-reduced packaging are stored in at least one storage container (18) and in that a coin-operated switch (12) is provided, by means of which a control device (15) performs the following in sequence after money has been inserted:
   – delivers one spray nozzle (17) from the at least one storage container (18) by means of a delivery device (16),
   – removes the packaging by means of a removal device (62) at least at the connecting end of the spray nozzle (17),
   – connects the spray nozzle (17) and the hose connector (20) from a device (31) and automatically locks them,
   – switches on the pump (22) to supply liquid and turns it off again by means of a timer switch (24) at the end of a period corresponding to the amount of money inserted,
   – automatically opens the locked connection by means of another device (40) after use of the oral rinsing device (3).

2. A device in accordance with claim 1, characterized in that a key (23) is provided for the manual activation of the pump (22) following connection of the spray nozzle (17) with the hose connector (20).

3. A device in accordance with claim 1 or 2, characterized in that a sensor (64) with a control readout (65) is provided for optical monitoring of the connecting areas of the spray nozzle (17) and hose connector (20), which only permits the activation of the pump (22) if the connection is properly locked.

4. A device in accordance with claim 2 or 3, characterized in that the device for connecting the spray nozzle (17) and the hose connector (20) consists of the following parts:
   – a pair of clamping jaws (26), embracing the grip section (36) and disposed on two slide rails (29) which extend parallel to each other and vertically to the axis of the spray nozzle (17) for gripping and transporting the spray nozzle (17) from the storage position into the desired connecting position by means of a double eccentric (27) with restoring springs (28), driven by a motor,
   – a guide roller drive (31) for the axial displacement of the hose (21), where the hose surface is preferably provided with grooves (32), on which the peripheral ribs (33) of the guide rollers (31) extend,
   – a support (61) for the vertical positioning of the hose connector (20) and the spray nozzle (17).

5. A device in accordance with one of claims 1 to 3, characterized in that the device for opening the locked connection, in which radially elastic fingers (37) with locking catches (38), distributed on the circumference of the plug-in end of the spray nozzle (17), extend behind an annular collar (39) of the hose connector (20), consists of two draw-off jaws (40) which are radially movable towards each other and which completely grip the hose connector (20) with their semicircular front edges (41) and which, for the radial disconnection of the fingers (37), extend behind inner surfaces (43) of the locking catches (38) with semicircular projections (42) extending away from the front edges (41).

6. A device in accordance with claim 5, characterized in that the fingers (37) have a predetermined breaking point (70).

7. A device in accordance with one of claims 1 to 6, characterized in that a valve (44) is disposed in the hose connector (20), the axially movable blocking member (46) of which is, in the disconnected state of the spray nozzle (17), pressed by means of a pressure spring (55) against a surface (56) of the hose connector (20) adapted to it and, when the spray nozzle (17) is slipped on, is pushed back against the force of the pressure spring (55) by a pin (57) for opening the valve (44), fixedly provided on the spray nozzle (17).

8. A device in accordance with one of claims 1 to 7, characterized in that a waste container (71) with an opening in the lid is provided for the disposal of the used spray nozzles (17) separated from the hose connector (20), which automatically closes after the spray nozzles (17) have fallen through.

9. A device in accordance with one of claims 1 to 8, characterized in that the spray nozzles (17) are sealed individually and spaced in a foil strip (19).

10. A device in accordance with claim 9, characterized in that a device for separating a sealed spray nozzle (17) from the foil strip (19) is provided.

11. A device in accordance with claim 10, characterized in that the separating device is in the form of a separating knife (30) and is a part of the delivery device (16).

12. A device in accordance with one of claims 1 to 11, characterized in that a separating device, preferably in the form of a heating rod (62), is provided for removing the foil cover on the plug-in end of the spray nozzle (17).

13. A device in accordance with one of claims 1 to 12, characterized in that a spray device (74) is provided for spraying the hose connector (20) with a disinfectant after each unplugging of a used spray nozzle (17).

14. A device in accordance with one of claims 1 to 13, characterized in that metering devices are provided for regulating the pressure of the stream of liquid, or the pulse frequency in a pulsing stream, or the mixture rate when several liquids are simultaneously dispensed, or the amount if gases and/or chemicals are added.

15. A device in accordance with one of claims 1 to 14, characterized in that different embodiments of spray nozzles, adapted to different treatment purposes, are provided in separate storage containers.

16. A device in accordance with claim 14 or 15, characterized in that the coin-operated switch (12) has a program selector (13), by means of which the various dosages and/or spray nozzles can be automatically set or selected via the control device (15).

17. A device in accordance with claim 16, characterized in that the program selector (13) is provided with an operator error lock and indicator.

18. A device in accordance with one of claims 1 to 17, characterized in that an operational control deice (75) with control lamps (76) for indicating low levels of liquids, chemicals or, if required, gases as well as the malfunction of parts of the device, is provided.

19. A device in accordance with claim 18, characterized in that the operational control device is connected with a parallel indicator or alarm device located at the place of the operator or lessor.

20. A device in accordance with one of claims 1 to 19, characterized in that a hose locking device is provided, which is released when the correct amount has been inserted into the coin-operated switch and which locks again at the end of the treatment period.

21. A device in accordance with one of claims 1 to 20, characterized in that an alarm device is provided which sounds an alarm when an attempt to damage the device (1) is made.

22. A device in accordance with one of claims 1 to 21, characterized in that the liquid or the liquid mixture or the liquid-gas mixture is pre-heated to approximately the temperature of the inside of the oral cavity by a preheater.

23. A device in accordance with one of claims 1 to 22, characterized in that a operating diagram (25) is provided, on which the steps to be taken by the user are sequentially shown.

24. A device in accordance with one of claims 1 to 23, characterized in that the oral rinsing device (3), including the coin-operated switch (12), control device (15), key (23), pump (22), timer clock (24) and, if desired, program selector (13), storage container, separating devices (30, 62), connecting and disconnecting device (31, 40), waste container (71), monitoring sensor (64), spray device (74), metering and mixing device, operational control device (75), operator error lock, hose lock, pre-heating device and alarm device, form a unit.

25. A device in accordance with claim 24, characterized in that the unit is additionally provided with a preferably laterally pivotable and height-adjustable wash basin (7), a device for removal of the used liquids and a slip-proof bottom (4, 5).

26. A device in accordance with claim 25, characterized in that lockable rollers (11) are provided on the underside of the bottom (5).

27. A device in accordance with claim 18 or 19, characterized in that the operational control device (75), together with the operational control devices of a plurality of independent devices for dental and oral hygiene, is connected with a central computer.

**Revendications**

1. Dispositif pour l'hygiène de la bouche, avec une douche buccale (3), dans lequel, grâce à une pompe (22), un liquide, dont l'action est en particulier médicale, peut être amené par l'intermédiaire d'un flexible (21) mobile pouvant sortir d'un boîtier (2) jusqu'à une buse (17) pouvant être connectée au flexible au moyen d'un raccord non fixe et constituée d'une poignée (36) et d'une embouchure (34), et peut en être éjecté sous forme de jet unique ou multiple, de préférence pulsé, caractérisé en ce qu'un grand nombre de buses (17) à usage unique, conditionnées dans un emballage individuel présentant au minimum une faible teneur en germes, est placé dans au moins un bac de réserve (18) et qu'il est prévu un interrupteur à pièces de monnaie (12) grâce auquel, par l'intermédiaire d'une unité de commande (15), et suite à l'insertion d'une somme d'argent, successivement:

    – une buse (17), prélevée dans le bac de réserve (18) ou dans l'un des bacs s'il y en a plusieurs, est fournie au moyen d'un dispositif de transport (16),

    – l'emballage est retiré au moyen d'un système de détachage, au moins à l'extrémité emboîtable de la buse (17),

    – la buse (17) et le raccord de flexible (20) sont fixés l'un à l'autre par crantage par un dispositif (31),

    – la pompe (22) d'amenée du liquide est mise en marche, et après écoulement d'un temps correspondant à la valeur de la pièce de monnaie, est arrêtée par une minuterie (24) et

    – l'assemblage par crantage est automatiquement défait au moyen d'un autre dispositif (40, une fois la douche buccale (3) utilisée.

2. Dispositif selon la revendication 1, caractérisé en ce qu'il est prévu une touche (23) servant à mettre manuellement la pompe (22) en marche après la fixation de la buse (17) et du raccord de flexible (20).

3. Dispositif selon les revendications 1 ou 2, caractérisé en ce qu'il est prévu un capteur (64) à affichage de contrôle (65) servant à la surveillance optique de la zone d'emboîtage de la buse (17) sur le raccord de flexible (20), de manière à ne permettre la mise en marche de la pompe (22) qu'une fois l'assemblage à crantage correctement réalisé.

4. Dispositif selon les revendications 2 ou 3, caractérisé en ce que le dispositif d'assemblage de la buse (17) au raccord de flexible (20) se compose des éléments suivants:

    – une paire de mâchoires de serrage (26) tenant la poignée (36) de la buse (17) et disposées sur deux coulisses (29) parallèles l'une par rapport à l'autre et perpendiculaires à l'axe de la buse (17), servant à prendre et à transporter la buse (17) depuis sa position de rangement vers sa position d'emboîtement au moyen d'un double excentrique motorisé (27) doté de ressorts de rappel (28),

    – un entraînement à galets de guidage (31) pour le déplacement axial du flexible (21), la surface du flexible étant de préférence dotée de rainures (32) dans lesquelles s'engagent les nervures périphériques (33) des galets de guidage (31),

    – un appui (61) pour le positionnement vertical du raccord de flexible (20) et de la buse (17).

5. Dispositif selon l'une des revendications 1 à 3, caractérisé en ce que le système de désassemblage, sur lequel des doigts à ressorts radiaux (37), répartis à la périphérie de l'embout de la buse (17) situé côté emboîtement et dotés de nez de crantage (38), s'engagent derrière une collerette (39) du raccord de flexible (20), se compose de deux mâchoires d'extraction (40) mobiles radialement l'une par rapport à l'autre, qui entourent entièrement le raccord de flexible (20) chacune par une arête frontale (41) de forme semi-circulaire, et qui s'engagent dans des surfaces intérieures (43) des nez de crantage (38) pour extraire radialement les doigts (37) avec des épaulements (42) semi-circulaires débordant des arêtes frontales (41).

6. Dispositif selon la revendication 5, caractérisé en ce que les doigts (37) présentent un point de rupture obligée (70).

7. Dispositif selon l'une des revendications 1 à 6, caractérisé en ce que dans le raccord de flexible (20) est disposée un clapet (44) dont l'organe de fermeture (46) à mouvement axial est comprimé par un ressort à pression (55) contre une surface appropriée (56) du raccord de flexible (20) lorsque la buse (17) n'est pas raccordée, et est repoussé vers l'arrière lors du branchement de la buse (17) grâce à un mandrin (57) fixé dans la buse et servant à l'ouverture du clapet (44) contre la force du ressort à pression (55).

8. Dispositif selon l'une des revendications 1 à 7, caractérisé en ce que, afin d'éliminer les buses (17) usagées une fois qu'elles sont détachées du raccord de flexible (20), il est prévu un bac à déchets (71) doté d'un couvercle de fermeture qui se referme automatiquement une fois les buses (17) tombées dans le bac.

9. Dispositif selon l'une des revendications 1 à 8, caractérisé en ce que les buses (17) sont scellées individuellement à intervalle régulier dans une bande de feuille plastique (19).

10. Dispositif selon la revendication 9, caractérisé en ce qu'il est prévu un système séparant individuellement les buses scellées (17) de la bande de feuille plastique (19).

11. Dispositif selon la revendication 10, caractérisé en ce que le système de séparation est un couteau de sectionnement (30) et qu'il fait partie du dispositif de transport (16).

12. Dispositif selon l'une des revendications 1 à 11, caractérisé en ce qu'un système de détachement, ayant de préférence la forme d'une cartouche chauffante, est prévue pour sortir l'embout situé côté emboîtement de la gaine en plastique entourant la buse (17).

13. Dispositif selon l'une des revendications 1 à 12, caractérisé en ce qu'il est prévu un dispositif de pulvérisation (74) de désinfectant sur le raccord flexible (20) après chaque désassemblage d'une buse usagée (17).

14. Dispositif selon l'une des revendications 1 à 13, caractérisé en ce qu'il est prévu des systèmes de dosage, grâce auxquels la pression du jet de liquide, sa fréquence d'impulsion, s'il s'agit d'un jet pulsé, sa proportion de mélange, s'il émet simultanément plusieurs liquides et sa quantité, si l'on y ajoute des gaz et/ou agents chimiques, sont réglables.

15. Dispositif selon l'une des revendications 1 à 14, caractérisé en ce qu'il est prévu dans des bacs de réserve séparés des buses de formes différentes, adaptées à des traitements divers.

16. Dispositif selon les revendications 14 ou 15, caractérisé en ce que l'interrupteur à pièce de monnaie (12) comporte un sélecteur de programmes (13) permettant de régler ou de choisir automatiquement les différents dosages et/ou buses par l'intermédiaire de l'unité de commande (15).

17. Dispositif selon la revendication 16, caractérisé en ce que le sélecteur de programmes (13) est doé d'un verrou empêchant les fausses manœuvres et d'un affichage signalant ces dernières.

18. Dispositif selon l'une des revendications 1 à 17, caractérisé en ce qu'il est prévu un dispositif de contrôle de fonctionnement (75) à voyants de contrôle (76) signalant un reste de liquides, d'agents chimiques et, le cas échéant, de gaz, ainsi que la défaillance de composants de l'appareil.

19. Dispositif selon la revendication 18, caractérisé en ce que le dispositif de contrôle de fonctionnement est relié à un affichage parallèle ou à un système d'alarme situés chez l'exploitant ou le loueur.

20. Dispositif selon l'une des revendications 1 à 19, caractérisé en ce qu'il est prévu un blocage du flexible qui est libéré par l'insertion du montant correct dans le distributeur à pièce de monnaie et qui se rebloque une fois le temps de traitement expiré.

21. Dispositif selon l'une des revendications 1 à 20, caractérisé en ce qu'il est prévu un système d'alarme émettant un signal d'alarme dès que quelqu'un tente d'endommager le dispositif (1).

22. Dispositif selon l'une des revendications 1 à 21, caractérisé en ce que le liquide ou le mélange liquide ou bien le mélange liquide/gaz est chauffé à peu près à la température intérieure de la bouche par un système de préchauffage.

23. Dispositif selon l'une des revendications 1 à 22, caractérisé en ce qu'il est prévu un affichage par représentation graphique signalant l'une après l'autre les actions que doit effectuer l'utilisateur.

24. Dispositif selon l'une des revendications 1 à 23, caractérisé en ce que la douche buccale (3), avec le distributeur à pièce de monnaie (12), l'unité de commande (15), la touche (23), la pompe (22), la minuterie (24), ainsi que, le cas échéant, le sélecteur de programmes (13), le bac de réserve, les dispositifs de séparation (30, 62), les systèmes d'assemblage et de désassemblage (31, 40), le bac à déchets (71), le capteur de surveillance (64), le dispositif de pulvérisation (74), le dispositif de dosage et de mélange, le dispositif de contrôle de fonctionnement (75), le verrou de fausse manœuvre, le blocage de flexible, le dispositif de préchauffage et le dispositif d'alarme, constituent un ensemble.

25. Dispositif selon la revendication 24, caractérisé en ce que l'ensemble est doté en supplément d'un lavabo (7) pouvant de préférence pivoter sur le côté et réglable en hauteur, d'un dispositif d'élimination des liquides usagés et d'un plancher anti-dérapant (4, 5).

26. Dispositif selon la revendication 25, caractérisé en ce que des roulettes blocables (11) sont prévues en-dessous du plancher (5).

27 Dispositif selon les revendications 18 ou 19, caractérisé en ce que le dispositif de contrôle de fonctionnement (75), avec les dispositifs de contrôle de fonctionnement de plusieurs dispositifs pour l'hygiène de la bouche indépendants les uns des autres, est relié à un central informatique.

*Fig.1*

_Fig.2_

_Fig.3_

**Fig.3a**
( Einzelheit bei A.)

EP 0 304 504 B1

**B - B**

_Fig.4a_

_Fig.4_

*Fig.5*